# EUROPÄISCHE PATENTSCHRIFT

(11) **EP 2 765 298 B1**
(45) Veröffentlichungstag und Bekanntmachung des Hinweises auf die Patenterteilung: **06.04.2016**
(21) Anmeldenummer: 14152309.2
(22) Anmeldetag: 23.01.2014
(51) Int. Cl.: F02M 35/02, B01D 46/00, B01D 46/24, B01D 46/42, B01D 46/52

(54) **Filterelement**
Filter element
Élément de filtre

(30) Priorität: 12.02.2013 DE 102013002274
(43) Veröffentlichungstag der Anmeldung: 13.08.2014
(73) Patentinhaber: MANN + HUMMEL GMBH, 71638 Ludwigsburg (DE)
(72) Erfinder: Kaufmann, Michael, 67149 Meckenheim (DE); Ruhland, Klaus-Dieter, 67149 Meckenheim (DE)

(56) Entgegenhaltungen:
- WO-A2-02/45819
- DE-A1- 19 829 989
- DE-A1-102010 010 964
- DE-A1-102011 106 502
- GB-A- 1 253 354
- JP-A- H07 119 566
- JP-A- 2003 138 994

## Beschreibung

### Technisches Gebiet

Die Erfindung betrifft ein Filtersystem und ein Filterelement zum Einbau in ein solches Filtersystems, insbesondere zur Verwendung als Luftfilter einer Brennkraftmaschine.

### Stand der Technik

Aus DE 198 29 989 A1, JP H07 119566 A, GB 1 253 354 A, JP 2003 138994 A, WO 02/45819 A2 und DE 10 2011 106502 A1 sind Luftfiltersysteme mit axial an einem Gehäusedeckel abgestützten Filterelementen bekannt. Aus DE 10 2010 010 964 A1 ist ein Luftfiltersystem mit einem als Gewinde ausgebildeten Kopplungselement an der offenen Endscheibe bekannt.

Aus der WO 2009/047196 A1 ist ein Filterelement bekannt, bei dem durch die Ausgestaltung der Dichtungen des Filterelements mit zwei ringwulstförmigen Anordnungen und einer dazwischen liegenden Dichtungsnut gewährleistet ist, dass einerseits eine Abdichtwirkung und andererseits eine axiale Abstützung des Filterelements in einem Gehäuse erzielt wird. Gerade bei der Verwendung von Kunststoff für die Abdichtung an schwingungsbelasteten Elementen ist eine Gestaltung erforderlich, die auch bei extremen Temperaturschwankungen zuverlässig arbeitet.

Weiter beschreibt die WO 2009/047196 A1 ein Filtersystem mit einem Filterelement. Dieses Filtersystem dient insbesondere der Filtrierung der Ansaugluft einer Brennkraftmaschine und besteht aus einem Gehäuse und einem Deckel zur Aufnahme des Filterelements. Das Filtersystem ist mit zwei Ringnuten ausgestattet, die im Bereich der Abdichtung mit den Dichtkonturen des Filterelements kommunizieren.

Üblicherweise werden die Filterelemente von Luftfiltern nach einer bestimmten Betriebszeit ausgetauscht. Je nach Staubanfall kann die Standzeit eines Luftfilters wenige Tage (Baumaschinen) bis zu mehreren Monaten betragen.

Insbesondere bei einem häufigen Austausch von Filterelementen ist die zuverlässige und prozesssichere Abdichtung des Filterelements in einem Gehäuse wichtig. Die Abdichtung soll temperaturbeständig und rütteltest ausgeführt sein. Auch an Anlagen oder Einrichtungen, die starken Schwingungen oder Erschütterungen ausgesetzt sind, muss die Abdichtung des Filterelements gewährleistet sein. Gleichzeitig soll aber das Filterelement selbst möglichst keine metallischen Elemente aufweisen, damit es problemlos thermisch entsorgt werden kann.

Eine Aufgabe der Erfindung ist es, ein Filterelement mit einer zuverlässigen Abdichtung zwischen dem Bereich des ungefilterten und dem Bereich des gefilterten Mediums zu schaffen, das insbesondere bei häufigem Austausch des Filterelements eine sichere Montierbarkeit in einem Gehäuse gewährleistet.

Eine weitere Aufgabe der Erfindung ist es, ein Filtersystem zur Aufnahme eines solchen austauschbaren Filterelements mit einer zuverlässigen Abdichtung und sicheren Montierbarkeit zu schaffen.

Die vorgenannten Aufgaben werden durch ein Filterelement und ein Filtersystem gelöst, welches einen Filterkörper in konzentrischer Form mit einer Längsachse, eine erste an einer Stirnseite angeordnete offene oder geschlossene Endscheibe und eine zweite an der gegenüberliegenden Stirnseite angeordnete Endscheibe sowie ein um die Längsachse konzentrisch zwischen der ersten und der zweiten Endscheibe angeordnetes Stützrohr umfasst, wobei wenigstens eine der Endscheiben eine oder mehrere Abstütznoppen aufweist, welche radial nach außen erstreckend kreisförmig um die Längsachse angeordnet sind und bei einem Einbau in ein aufnehmendes Gehäuse an einer inneren Deckelkontur des Gehäuses mit einem in den Innenraum des Gehäuses hineinragenden Kegelstumpf anliegend sich in radialer Richtung nach außen umlegen und an dem Gehäuse axial und radial abstützen.

Günstige Ausgestaltungen und Vorteile der Erfindung ergeben sich aus den weiteren Ansprüchen, der Beschreibung und der Zeichnung

### Offenbarung der Erfindung

Es wird ein Filterelement vorgeschlagen, umfassend einen Filterkörper in konzentrischer Form mit einer Längsachse, eine erste an einer Stirnseite angeordnete offene oder geschlossene Endscheibe und eine zweite an der gegenüberliegenden Stirnseite angeordnete Endscheibe sowie ein um die Längsachse konzentrisch zwischen der ersten und der zweiten Endscheibe angeordnetes Stützrohr.

Dabei weist wenigstens eine der Endscheiben eine oder mehrere Abstütznoppen auf, welche radial nach außen erstreckend kreisförmig um die Längsachse angeordnet sind und bei einem Einbau in ein aufnehmendes Gehäuse an einer inneren Deckelkontur des Gehäuses mit einem in den Innenraum des Gehäuses hineinragenden Kegelstumpf anliegend sich in radialer Richtung nach außen umlegen und an dem Gehäuse axial und radial abstützen.

Im Gegensatz zum Stand der Technik, wo lediglich Abstütznoppen bekannt sind, die sich entweder axial verformen oder radial nach innen verformen, weisen diese Abstütznoppen die Eigenschaft auf, dass das Filterelement durch die abstützende Wirkung in axialer und in radialer Richtung auch bei starken Vibrationen des Gehäuses fest in Position gehalten wird. Die bewusst starke radiale Verformungskomponente der Abstütznoppen ermöglicht eine sehr gute Zentrierung des Filterelementes. Außerdem bilden sich durch das Aufbiegen der Abstütznoppen nach radial außen tangentiale Zugkräfte, die größere Steifigkeiten und Rückformkräfte erzeugen. Dies ist bei größeren und somit schwereren Filterelementen insbesondere für den Baumaschinen- oder Landmaschinenbereich von Vorteil und optimiert zudem den mehrmaligen Aus-und Einbau der Filterelemente beim Service.

Beim Einsatz eines solchen Filterelements im Baumaschinen- oder Landmaschinenbereich ist die Filterbelastung mit Staub und Schmutzpartikeln sehr hoch, so dass das Gewicht eines beladenen Filterelements um einige Kilogramm zunehmen kann. Das Filterelement wie auch das zugehörige Filtersystem muss entsprechend robust ausgelegt sein.

In einer günstigen Ausführungsform können die eine oder mehreren Abstütznoppen so angeordnet sein, dass sie beim Einbau in das Gehäuse mit rippenförmigen Erhebungen in der inneren Deckelkontur des Gehäuses verzahnbar sind. Durch eine solche Verzahnung ist eine Verdrehsicherung des Filterelements im Gehäuse gegeben, wodurch die Lagestabilität des Filterelementes bei Schwingungsanregung im Betrieb stark begünstigt wird. Denkbar ist auch eine Abstandsnoppe, die ringförmig um die Längsachse angeordnet ist.

Vorteilhafterweise kann die zweite Endscheibe in radialer Richtung außerhalb der Abstütznoppen eine Entlastungsnut aufweisen, wodurch das Umlegen der Abstütznoppen bei der Montage im Gehäuse und Verschließen des Deckels erleichtert wird. Durch die Entlastungsnut kann die Verformbarkeit der Abstütznoppen günstig beeinflusst werden. Die Entlastungsnut kann konzentrisch zur Längsachse angeordnet sein.

Zweckmäßigerweise kann die zweite Endscheibe in radialer Richtung außerhalb der Abstütznoppen und/oder der Entlastungsnut eine Erhebung zur Abstützung der sich in radialer Richtung nach außen umlegenden Abstütznoppen aufweisen. Wenn eine Abstütznoppe sich bei der Montage umlegt, erhält sie so durch das Aufliegen auf der Erhebung eine Unterstützung zum Abfangen der axialen Kraft durch das Filterelement. Auf diese Weise kann das Filterelement sicher und stabil eingespannt werden. Der Endanschlag verhindert ein "Überformen" der Abstütznoppen, bei dem diese abknicken und gänzlich ihre Rückstellwirkung verlieren könnten. Die Erhebung kann z.B. als Ring konzentrisch zur Längsachse angeordnet sein. Denkbar ist auch, die Erhebung in Segmente zu unterteilen, deren Lage mit den Abstütznoppen korrespondiert.

In einer vorteilhaften Ausgestaltung kann die zweite Endscheibe mit dem Stützrohr des Filterelements einstückig, insbesondere materialschlüssig, ausgeführt sein. Eine derartige Ausgestaltung stellt eine sichere Montage sowie ein möglichst stabiles Verhalten im Betrieb sicher, da sich Endscheibe und Stützrohr als stützendes Element des gesamten Filterelements auch bei starken Schwingungsanregungen nicht voneinander lösen können.

In einer weiteren vorteilhaften Ausgestaltung kann die zweite Endscheibe im Bereich zwischen dem Filterkörper und den Abstütznoppen eine Verstärkungsplatte oder einen Verstärkungsring aufweisen. Ein solches stabilisierendes Element in der Endscheibe, das im Gegensatz zur Endscheibe, die üblicherweise aus weichen Kunststoff besteht, aus hartem Kunststoff oder sogar aus Metall bestehen kann, kann entscheidend zur Stabilität des gesamten Filterelements beitragen. Dies ist gerade bei Filterelementen für den Einsatz im Baumaschinen- oder Landmaschinenbereich, wo entsprechend große und schwere Filterelemente benötigt werden, von Bedeutung. Eine solche Verstärkungsplatte oder Verstärkungsring kann beispielsweise in die Endscheibe eingegossen sein.

Als weitere stabilisierende Maßnahme kann das Stützrohr an beiden Enden einen ringförmigen Aufsatz mit L-förmigem Querschnitt aufweisen, um eine axiale Krafteinleitung in die erste und die zweite Endscheibe räumlich zu verteilen. Auch dieser Aufsatz kann aus mechanisch härterem Werkstoff als der Werkstoff der Endscheibe bestehen, um so auch größere Kräfte, die durch die Verspannung des Filterelements beim Zusammenbau auftreten, aufzunehmen und räumlich auf eine größere Montagefläche zu verteilen.

Vorteilhafterweise kann die zweite Endscheibe, ebenso wie die erste Endscheibe, aus einem Polyurethanschaum oder einem Elastomer bestehen. Selbstverständlich besteht auch die Möglichkeit, die Endscheibe aus mehreren Kunststoffkomponenten herzustellen, um so eine optimale Verformbarkeit über einen großen Temperaturbereich, wie er beim Einsatz in der Praxis auftreten kann, zu gewährleisten. So sind auch thermoplastische Kunststoffe nicht ausgeschlossen. Beide Endscheiben können mit dem Filterkörper verschweißt oder verklebt ausgeführt sein, um eine stabile Verbindung zu bewirken.

Zweckmäßigerweise kann die erste Endscheibe eine radiale Dichtung gegenüber dem Gehäuse aufweisen. Dies hat den Vorteil, dass neben einer guten Abdichtung und damit einer sicheren Filterwirkung, durch die radiale Dichtung sowie der radialen Verspannung der Abstütznoppen im Deckel eine doppeltradiale Führung des Filterelements im Gehäuse bewirkt werden kann und damit eine sehr stabile Halterung des Filterelements im Gehäuse entsteht.

In einer günstigen Ausgestaltung kann der Filterkörper zickzackförmig gefaltet, ringförmig geschlossen ausgeführt sein und aus Papier, aus Papier mit Kunststofffasern verstärkt und/oder aus kunststoffbeschichtetem Papier bestehen. Der Einsatz dieser Werkstoffe als Filtermedium stellt eine sehr wirtschaftliche Möglichkeit dar, ein solches Filterelement zu realisieren. Gleichzeitig bietet die beschriebene Formgestaltung eine stabile Anordnung, so dass eine selbsttragende Bauweise des Filterkörpers und damit eine günstige Montageeigenschaft gegeben sind.

Zweckmäßigerweise kann das Filterelement als Luftfilter, insbesondere als Luftfilter einer Brennkraftmaschine verwendet werden. Der sichere Betrieb von Brennkraftmaschinen beruht auch auf einer sicheren und günstigen Füterung der Ansaugluft für den Verbrennungsbetrieb. Das beschriebene Filterelement stellt dafür eine wirtschaftliche Möglichkeit dar.

Vorteilhaft ist ebenso die Verwendung des Filterelements als Partikelfilter, insbesondere als Ölfilter oder Kraftstofffilter einer Brennkraftmaschine. Auch hier sind die sichere Montage und wirtschaftliche Austauschbarkeit des beschriebenen Filterelements von entscheidender Bedeutung.

Die Erfindung betrifft nach einem weiteren Aspekt ein Filtersystem mit einem Filterelement, umfassend ein Gehäuse, welches im Wesentlichen konzentrisch um eine Längsachse aufgebaut ist, einen das Gehäuse verschließenden Deckel, der ebenfalls konzentrisch um die Längsachse aufgebaut ist und auf seiner Innenseite eine innere Deckelkontur aufweist, so dass die Abstütznoppen der zweiten Endscheibe des Filterelements an die Deckelkontur anliegend sich in radialer Richtung nach außen umlegen, und/oder rippenförmige Erhebungen aufweist, mit der die Abstütznoppen verzahnbar sind, einen am Gehäuse und/oder Deckel angeordneten Einlass zum Zuführen des zu filternden Mediums, insbesondere Luft, wobei am Gehäuse konzentrisch zur Längsachse ein Auslass zur Ableitung des gefiltertem Mediums vorgesehen ist, wobei am Gehäuse im Bereich des Auslasses eine Dichtungskontur vorgesehen ist, die mit der radialen Dichtung der ersten Endscheibe des Filterelements korrespondiert, wobei das Filterelement auswechselbar in dem Gehäuse des Filtersystems angeordnet ist. Der wesentliche Vorteil eines solchen Filtersystems liegt dabei in der sicheren und stabilen Montage des Filterelements sowie einer sehr wirtschaftlichen Austauschbarkeit des Filterelements im Servicefall. Gerade bei niedrigen Standzeiten, wie sie im Land- und Baumaschineneinsatz auftreten können, ist die schnelle Austauschbarkeit von großer Bedeutung.

Die Deckelkontur weist erfindungsgemäß einen in den Innenraum des Gehäuses hineinragenden Kegelstupf auf. Dieser kann von einer ebenen Grundfläche des Deckels abstehen oder durch den radial innenliegenden Teil einer ringförmig umlaufenden Nut gebildet sein. Die Flanke des Kegelstupfes kann auch konkav gerundet sein. Die Deckelkontur in Form der Nut bzw. des Kegelstumpfes ist bevorzugt mit einem flachen Winkel ausgeführt. Flach in diesem Zusammenhang kann bedeuten, dass die Fläche in Richtung der Mittelachse in den Gehäuseinnenraum in einem Winkel von kleiner 45°, bevorzugt kleiner 30°, besonders bevorzugt kleiner gleich 20° ansteigt. Die Abstütznoppen sind bevorzugt so angeordnet, dass sie an der Flanke des Kegelstumpfes bzw. an der radial innenliegenden Seite der ringförmig umlaufenden Nut anlegbar und unterstützt durch den Winkel der inneren Seite der Nut bzw. der Flanke des Kegelstumpfes nach radial außen umlegbar sind.

In einer bevorzugten Ausführungsform sind rippenförmigen Erhebungen in der inneren Deckelkontur vorgesehen. Diese verlaufen bevorzugt radial und sind regelmäßig in Kreisform in der Deckelkontur oder in der ringförmig umlaufenden Nut oder an der Flanke des flachen Kegelstumpfes angeordnet. Dies hat den Vorteil, dass die Abstütznoppen einer zweiten Endscheibe eines Filterelements sich formschlüssig um die Rippen herum verformen können, wenn sie sich an die Deckelkontur anlegen, wodurch ein insbesondere verzahnungsartiger Formschluss entsteht. Auf diese Weise kann das Filterelement gegen Verdrehen im Betrieb auch bei einer möglichen Schwingungsanregung geschützt werden.

Vorteilhafterweise kann im Bereich des Einlasses des Filtersystems ein Zyklonabscheider vorgesehen sein und am Gehäuse oder am Deckel ein Schmutzauslass vorgesehen sein. Dieser Zyklonabscheider besteht aus einer Leitgeometrie, die das zu filternde Medium in eine Rotation versetzt. Durch diese Rotation wird der Schmutz im Bereich der Gehäusewand aufkonzentriert und an einer geeigneten Stelle über einen Schmutzauslass ausgetragen. Durch die Vorabscheidung des größten Teils an Schmutz aus der zu filternden Luft kann die Standzeit des eigentlichen Filterelements entscheidend verlängert werden.

Gemäß einer weiteren Ausgestaltung der Erfindung kann ein Sekundärelement im Inneren des Filterelements angeordnet sein. Das Sekundärelement, das aus einer tragenden Struktur bestehen kann, die mit einem durchlässigen Filtermedium, beispielsweise einem Vlies, verkleidet ist, hat die Aufgabe, bei einem Austausch des Filterelements den Auslass des Filtersystems weiterhin verschlossen zu halten, so dass kein Schmutz in diesen Bereich eindringen kann, während das Filterelement gereinigt oder erneuert wird. Das Sekundärelement ist in bevorzugter Ausgestaltung über eine Schraubverbindung mit dem Gehäuse verbunden und zum Gehäuse mit einer Dichtung versehen.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

**Es zeigen beispielhaft:**
- Fig. 1: eine perspektivische Ansicht eines Filtersystems nach einem Ausführungsbeispiel der Erfindung mit tangentialem Einlass, zentrischem Auslass und bodenseitigem Schmutzauslass;
- Fig. 2: eine perspektivische Ansicht eines Filtersystems nach einem Ausführungsbeispiel der Erfindung mit radialem Einlass und zentrischem Auslass;
- Fig. 3: Längsschnitt durch ein Filtersystem nach einem Ausführungsbeispiel der Erfindung mit tangentialem Einlass, zentrischem Auslass und bodenseitigem Schmutzauslass;
- Fig. 4: eine perspektivische Teilansicht eines Filterelements nach einem Ausführungsbeispiel der Erfindung mit zweiter Endscheibe und Abstütznoppen;
- Fig. 5: Teilquerschnitt eines Filterelements nach einem Ausführungsbeispiel der Erfindung, dargestellt in eingebautem Zustand mit radial nach außen umgelegten Abstütznoppen;
- Fig. 6: Teilquerschnitt eines Filterelements nach einem Ausführungsbeispiel der Erfindung, dargestellt in eingebautem Zustand mit radialer Dichtung einer ersten Endscheibe;
- Fig. 7: Innenansicht eines Deckels eines Gehäuses eines Filtersystems mit rippenförmigen Erhebungen in der inneren Deckelkontur nach einem Ausführungsbeispiel der Erfindung;
- Fig. 8: Schnitt durch eine zweite Endscheibe eines Filterelements nach einem Ausführungsbeispiel der Erfindung.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

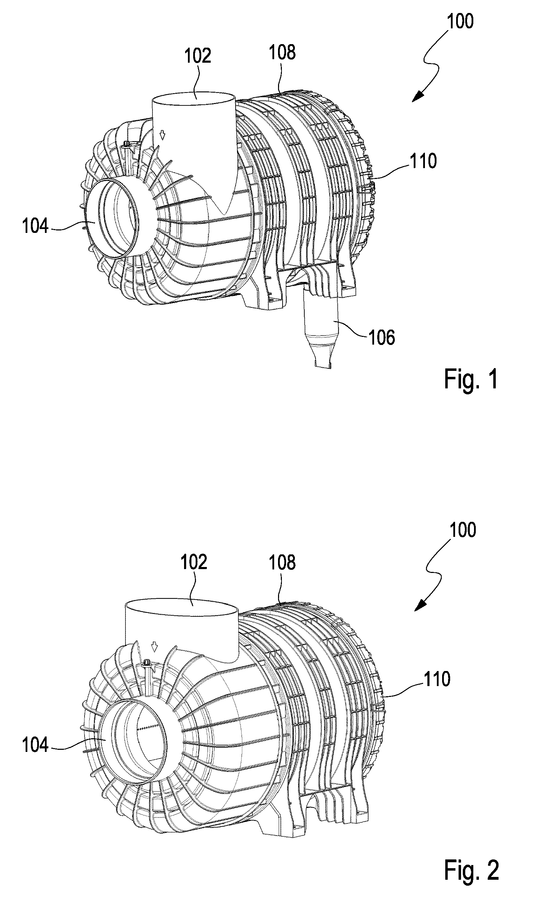

Figur 1 zeigt eine perspektivische Ansicht eines Filtersystems 100 nach einem Ausführungsbeispiel der Erfindung mit tangentialem Einlass 102, zentrischem Auslass 104 an einer Gehäusestirnseite und bodenseitigem Schmutzauslass 106. Dargestellt ist eine Rundfilterbauform, die aus einem Gehäuse 108 besteht, das mit einem Deckel 110, beispielsweise mit Schraub- oder Bajonettverschluss, verschlossen wird.
Bei einer Verwendung als Luftfiltersystem strömt staubbeladene Luft in den Einlass 102, der tangential zum innen eingebauten Luftfilterelement angeordnet ist, so dass die Luft im Innern des Gehäuses 108 durch einen Anströmschutz am Filterelement in eine Rotationsbewegung versetzt wird. Filterelement und Anströmschutz sind in der Zeichnung nicht dargestellt. Durch den über die Rotationsbewegung der Luft bewirkten Zykloneffekt wirken Fliehkräfte auf die Staubpartikel der strömenden Luft, so dass diese sich teilweise an der Gehäusewand abscheiden und über den Schmutzauslass 106 aus dem Filtersystem 100 abströmen können. Dadurch wird das Filterelement weniger belastet, die Standzeit des Filterelements wird erhöht. Die gereinigte Luft kann über den zentrischen Auslass 104 aus dem Gehäuse 108 abgeführt werden.

Figur 2 zeigt eine perspektivische Ansicht eines Filtersystems 100 nach einem Ausführungsbeispiel mit deckelseitigem Einlass 102 und zentrischem Auslass 104. Dargestellt ist ebenfalls eine Rundfilterbauform, die aus einem Gehäuse 108 besteht, das mit einem Deckel 110 verschlossen ist. Der Einlass, über den staubbeladene Luft in das Gehäuse gelangen kann, ist in dem Fall zentral über dem innen angebrachten Filterelement angeordnet. Der Auslass 104, über den die gereinigte Luft abströmen kann, ist ebenfalls wie in Figur 1 zentrisch angeordnet.

Derartige Filtersysteme wie in Figur 1 und 2 dargestellt werden üblicherweise im Baumaschinen und Landmaschinenbereich eingesetzt. Sie zeichnen sich durch große Robustheit aus und weisen wegen der hohen Filterlast kurze Standzeiten auf. Ein Filtersystem 100 mit beladenem Filterelement muss dabei einen Gewichtszuwachs von 10 kg oder mehr tolerieren.

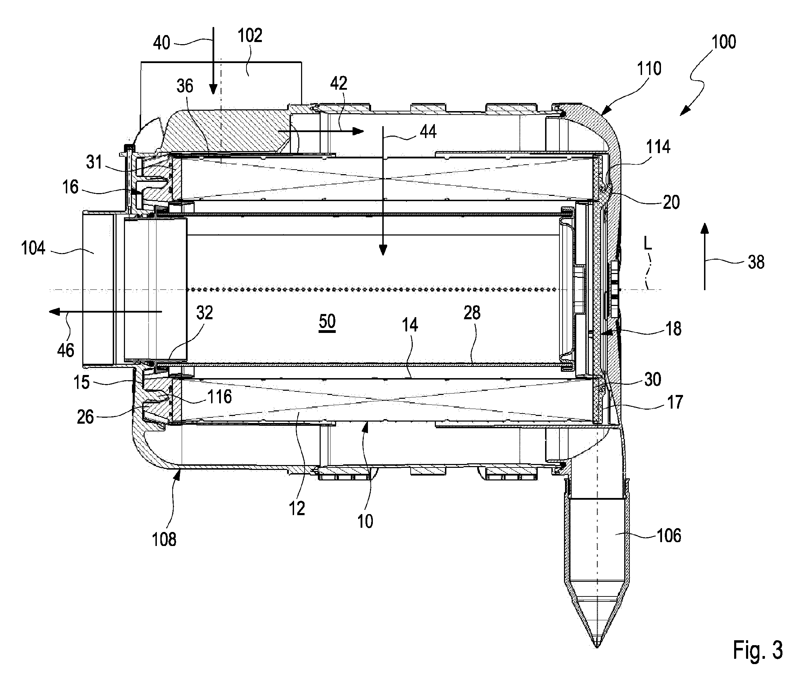

In Figur 3 ist ein Längsschnitt durch ein Filtersystem 100 nach einem Ausführungsbeispiel mit tangentialem Einlass 102, zentrischem Auslass 104 und bodenseitigem Schmutzauslass 106 dargestellt. Das Gehäuse 108 des Filtersystems 100 ist mit einem Deckel 110 verschlossen. Ein Filterelement 10, das aus konzentrisch zu einer Längsachse L angeordnetem Stützrohr 14 und Filterkörper 12 besteht, ist an zwei gegenüberliegenden Stirnseiten 15, 17 mit einer ersten und einer zweiten Endscheibe 16, 18, die beispielsweise aus Polyurethanschaum oder einem Elastomer ausgeführt sein können, abgeschlossen. Zweite Endscheibe 18 und Stützrohr 14 des Filterelements 10 können auch einstückig ausgeführt sein.

Der Filterkörper 12 kann beispielsweise zickzackförmig gefaltet, ringförmig geschlossen ausgeführt sein und beispielsweise aus Papier, aus Papier mit Kunststofffasern verstärkt und/oder aus kunststoffbeschichtetem Papier bestehen.

Die zweite Endscheibe 18, deren Stabilität durch eine Verstärkungsplatte 30 erhöht wird, weist segmentartig unterbrochene Abstütznoppen 20 auf, welche radial nach außen erstreckend kreisförmig um die Längsachse L angeordnet sind und bei einem Einbau in das aufnehmende Gehäuse 108 an einer inneren Deckelkontur 114 des Deckels 110 anliegend sich in radialer Richtung 38 nach außen umlegen und dadurch an dem Gehäuse 108 sowohl axial als auch radial abstützen. An der gegenüberliegenden Stirnseite 15 des Filterelements 10 ist an der ersten Endscheibe 16, deren Stabilität durch einen Verstärkungsring 31 erhöht wird, eine Radialdichtung 26 angebracht, mit deren Hilfe das Filterelement 10 sich über die Dichtungskontur 116 an dem Gehäuse 108 radial abstützt und den ungefilterten gegen den gefilterten Luftraum abdichtet. Das Filterelement 10 ist damit sowohl axial als auch doppelt radial gegen das Gehäuse 108 verspannt.

Staubbeladene Luft kann durch den Einlass 102 in Pfeilrichtung 40 einströmen, der in diesem Fall als tangentialer Einlass dargestellt ist und durch die mit Hilfe eines Zyklonabscheiders 36 bewirkte Rotationsbewegung der Luft einen Zyklonbetrieb ermöglicht. Staubpartikel können durch die Rotationsbewegung teilweise vorabgeschieden sich an der inneren Gehäusewand ablagern und durch den Schmutzauslass 106 bei Einbau des Filtergehäuses 108 in waagrechter Lage nach unten durch die Schwerkraft aus dem Filtersystem 100 entleert werden. Die Luft strömt beim Betrieb nach Teilabscheidung der Staubpartikel durch den Filterkörper 12 in Pfeilrichtung 42, 44 ins Innere 50 des Filterelements. Staubpartikel bleiben dabei je nach Filtermedium ab einer bestimmten Größe im Filtermedium hängen. Je nach Staubeintrag muß deshalb das Filterelement 10 nach einer gewissen Standzeit ausgetauscht werden.

Über den Auslass 104 strömt die gefilterte Luft in Pfeilrichtung 46 ab. Im Inneren 50 des Filterelements 10 ist ein Sekundärelement 28 angebracht, das im Wesentlichen aus einer tragenden Struktur mit einem relativ durchlässigen Filtermedium, beispielsweise einem Vlies, besteht und beim Austausch des Filterelements 10 im Gehäuse 108 zum Schutz der weiteren Luftführung, beispielsweise einer Brennkraftmaschine, gegen eindringende Staubpartikel und andere Gegenstände verbleibt. Das Sekundärelement 28 ist mit einem Schraubteil 32 fest am auslassseitigen Teil des Gehäuses 108 eingeschraubt.

Das Filterelement 10 kann als Luftfilter, insbesondere als Luftfilter einer Brennkraftmaschine, eingesetzt werden. Prinzipiell ist jedoch auch eine Verwendung als Dieselpartikelfilter in ähnlicher Bauform denkbar.

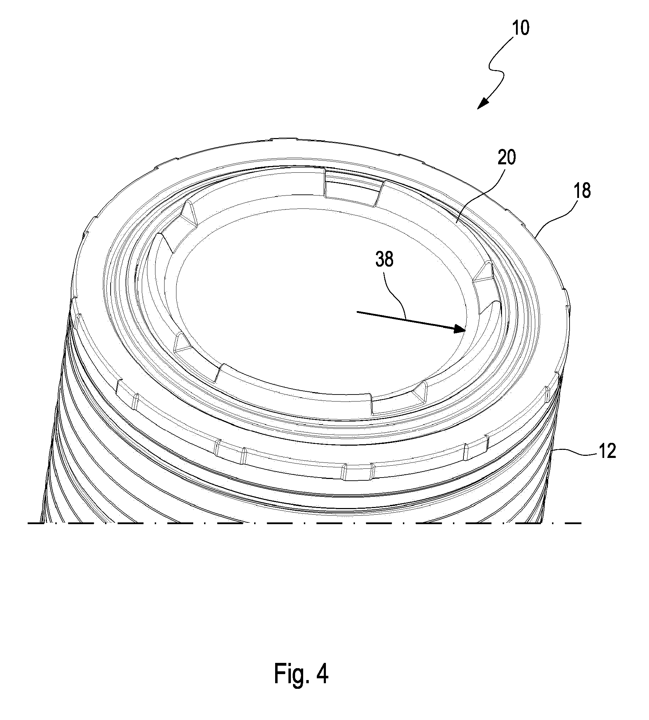

Figur 4 zeigt eine perspektivische Teilansicht eines Filterelements 10 nach einem Ausführungsbeispiel der Erfindung mit zweiter Endscheibe 18 und Abstütznoppen 20. Es ist zu erkennen, wie die zweite Endscheibe 18 als Abschluss des Filtermediums 12 dieses abdichtet. Auf der zweiten Endscheibe 18 sind auf einem kreisförmigen Gebiet unterbrochene Segmente als Abstütznoppen 20 zu sehen, die sich bei Einbau in ein Gehäuse und Abstützen an einer inneren Deckelkontur in radialer Richtung 38 nach außen umlegen können.

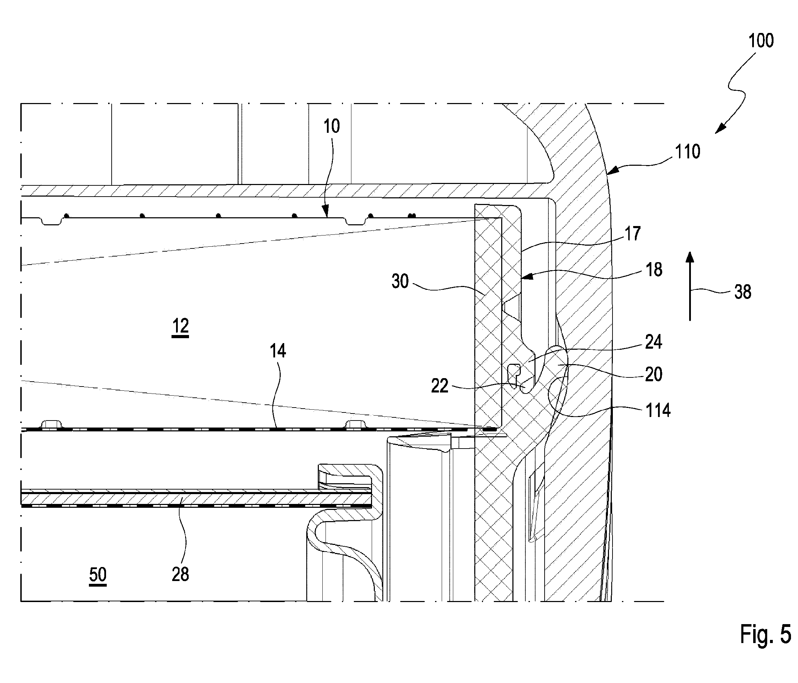

In Figur 5 ist ein Teilquerschnitt eines Filterelements 10 nach einem Ausführungsbeispiel in eingebautem Zustand mit umgelegten Abstütznoppen 20 dargestellt. Im Schnitt sind die umgelegten Abstütznoppen 20 der zweiten Endscheibe 18 zu sehen, die beim Zusammenbau durch Andrücken des Deckels 110 und Umlenken durch die innere Deckelkontur 114 in radialer Richtung 38 nach außen gedrückt werden. Das Umlegen der Abstütznoppen 20 wird durch die Entlastungsnut 22 begünstigt, die in radialer Richtung außerhalb der Abstütznoppen 20 angeordnet ist. Die umgelegten Abstütznoppen 20 können sich auf der Erhebung 24 der zweiten Endscheibe 18 abstützen, so dass eine feste Verspannung in axialer und radialer Richtung der Stirnseite 17 des Filterelements 10 ermöglicht wird. Weiter dargestellt in der Figur 5 ist das Stützrohr 14, das dem Filterelement 10 eine steife Struktur gibt, sowie der Filterkörper 12, der in die zweite Endscheibe 18 eingreift. Ebenfalls zu sehen ist eine Verstärkungsscheibe 30, die in die zweite Endplatte eingebettet ist. Die Erhebung 24 kann als umlaufender Ring ausgebildet sein, der das kreisförmige Gebiet der Abstütznoppen 20 umgibt, oder passend zu den Abstütznoppen 20 segmentiert sein.

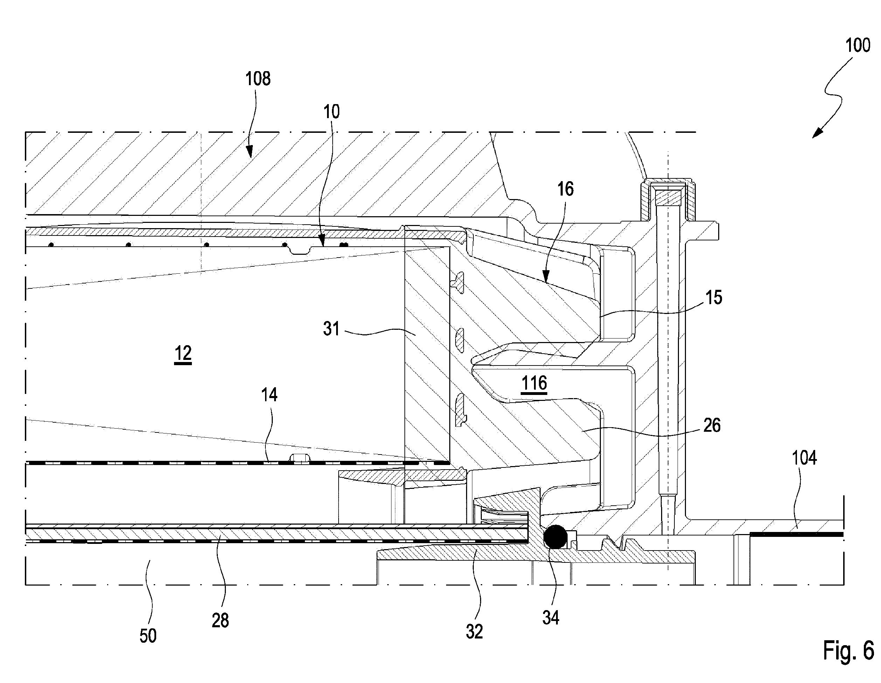

Figur 6 zeigt einen Teilquerschnitt eines Filterelements 10 nach einem Ausführungsbeispiel der Erfindung, dargestellt in eingebautem Zustand mit radialer Dichtung 26 der ersten Endscheibe 16. Das Filterelement 10, das abschnittweise mit Stützrohr 14 und Filterkörper 12 dargestellt ist, ist an der Stirnseite 15 mit der ersten Endscheibe 16 abgeschlossen, auf die eine Radialdichtung 26 aufgebracht ist. Mit dieser Radialdichtung 26 wird das Filterelement 10 in eine Dichtungskontur 116 des Gehäuses 108 gedrückt, so dass dadurch eine zuverlässige radiale Dichtheit gegeben ist. Ebenfalls dargestellt ist ein Sekundärelement 28, das im Inneren 50 des Filterelements 10 angebracht und über ein Schraubteil 32 am auslassseitigen Ende 104 des Gehäuses 108 mit diesem verschraubt ist und im Fall eines Austausches des Filterelements 10 den weiteren Luftführungsweg, beispielsweise in eine Brennkraftmaschine, vor einer eventuellen Verschmutzung schützt. Das Schraubteil 32 ist mit einem O-Ring 34 gegen das Gehäuse 108 abgedichtet.

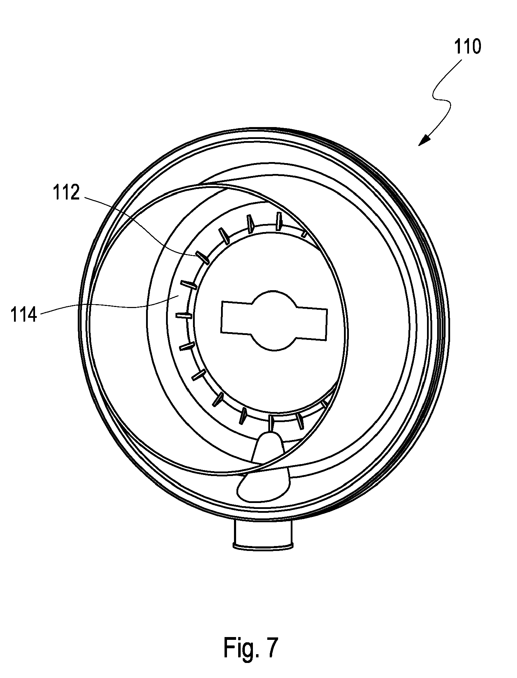

Figur 7 zeigt die Innenansicht eines Deckels 110 eines Gehäuses eines Filtersystems mit rippenförmigen Erhebungen 112 in der inneren Deckelkontur 114 nach einem Ausführungsbeispiel der Erfindung. Durch Verzahnung der Abstütznoppen einer zweiten Endscheibe eines Filterelements kann das Filterelement gegen Verdrehen im Betrieb auch bei einer möglichen Schwingungsanregung geschützt werden.

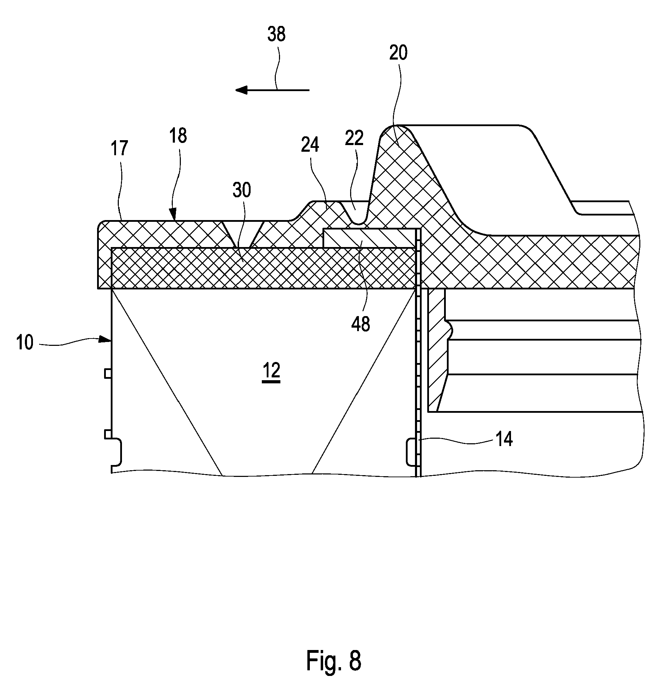

Figur 8 zeigt einen Schnitt durch eine zweite Endscheibe 18 eines Filterelements 10 nach einem Ausführungsbeispiel der Erfindung in unverspanntem Zustand. Die zweite Endscheibe 18 schließt das Filterelement mit Filterkörper 12 und Stützrohr 14 an einer Stirnseite ab. Eine Abstütznoppe 20 der zweiten Endscheibe 18 ist im entspannten Zustand dargestellt. Deutlich sind auch eine Entlastungsnut 22 sowie eine Erhebung 24 zu erkennen. Die Entlastungsnut 22 erleichtert das Umlegen der Abstütznoppen 20 in radialer Richtung nach außen, wobei sich aber die Abstütznoppe 20 auf der Erhebung 24 wiederum abstützen kann. Dadurch ist eine feste axiale Verspannung des Filterelements 10 ermöglicht. Das Stützrohr 14 weist einen ringförmigen Aufsatz 48 mit L-förmigem Querschnitt auf, um eine axiale Krafteinleitung in die zweite Endscheibe 18 räumlich zu verteilen. Dasselbe Prinzip der Kraftverteilung ist auch am anderen Ende des Stützrohrs 14 mit der ersten Endscheibe 16 denkbar.

## Patentansprüche

1. Filtersystem (100) mit einem in einem Gehäuse (108) angeordneten Filterelement (10), das Filterelement (10) umfassend einen Filterkörper (12) in konzentrischer Form mit einer Längsachse (L), eine erste an einer Stirnseite (15) angeordnete offene oder geschlossene Endscheibe (16) und eine zweite an der gegenüberliegenden Stirnseite (17) angeordnete Endscheibe (18), ein um die Längsachse (L) konzentrisch zwischen der ersten und der zweiten Endscheibe (16, 18) angeordnetes Stützrohr (14), wobei wenigstens eine der Endscheiben (16, 18) eine oder mehrere Abstütznoppen (20) aufweist, welche axial nach außen erstreckend kreisförmig um die Längsachse (L) angeordnet sind und bei einem Einbau in ein aufnehmendes Gehäuse (108) an einer inneren Deckelkontur (114) des Gehäuses (108) anliegend sich in radialer Richtung (38) nach außen umlegen und an dem Gehäuse (108) axial und radial abstützen, das Filtersystem weiter umfassend
- ein Gehäuse (108), welches im Wesentlichen konzentrisch um eine Längsachse (L) aufgebaut ist,
- einen das Gehäuse (108) verschließenden Deckel (110), der ebenfalls konzentrisch um die Längsachse (L) aufgebaut ist und auf seiner Innenseite eine innere Deckelkontur (114) mit einem in den Innenraum des Gehäuses hineinragenden Kegelstupf aufweist, an welcher eine oder mehreren Abstütznoppen (20) einer zweiten Endscheibe (18) des Filterelements (10) anlegbar und in radialer Richtung (38) nach außen umlegbar sind,
- einen am Gehäuse (108) und/oder Deckel (110) angeordneten Einlass (102) zum Zuführen des zu filternden Mediums, insbesondere Luft,
wobei am Gehäuse (108) konzentrisch zur Längsachse (L) ein Auslass (104) zur Ableitung des gefiltertem Mediums vorgesehen ist, wobei am Gehäuse (108) im Bereich des Auslasses (104) eine Dichtungskontur (116) vorgesehen ist, die mit der radialen Dichtung (26) der ersten Endscheibe (16) des Filterelements (10) korrespondiert, wobei das Filterelement (10) auswechselbar in dem Gehäuse (108) des Filtersystems (100) angeordnet ist.

2. Filtersystem (100) nach einem der vorhergehenden Ansprüche, wobei im Bereich des Einlasses (102) ein Zyklonabscheider (36) vorgesehen ist und am Gehäuse (108) oder am Deckel (110) ein Schmutzauslass (106) vorgesehen ist.

3. Filtersystem (100) nach einem der vorhergehenden Ansprüche, wobei ein Sekundärelement (28) im Inneren (50) des Filterelements (10) angeordnet ist, welches insbesondere mit dem Gehäuse (108) verbunden, beim Wechsel des Filterelements (10) im Gehäuse (108) verbleiben kann.

4. Filtersystem nach einem der vorhergehenden Ansprüche, wobei in der Deckelkontur (114) rippenförmigen Erhebungen vorgesehen sind, die insbesondere radial verlaufen und bevorzugt regelmäßig in Kreisform angeordnet sind und von filterelementseitigen Abstütznoppen (20) formschlüssig umschließbar sind.

5. Verwendung eines Filtersystems (100) nach einem der vorhergehenden Ansprüche, als Luftfilter, insbesondere als Luftfilter einer Brennkraftmaschine.

6. Filterelement (10) zum Einbau in ein Filtersystem nach einem der vorhergehenden Ansprüche, umfassend einen Filterkörper (12) in konzentrischer Form mit einer Längsachse (L), eine erste an einer Stirnseite (15) angeordnete offene oder geschlossene Endscheibe (16) und eine zweite an der gegenüberliegenden Stirnseite (17) angeordnete Endscheibe (18), ein um die Längsachse (L) konzentrisch zwischen der ersten und der zweiten Endscheibe (16, 18) angeordnetes Stützrohr (14), wobei wenigstens eine der Endscheiben (16, 18) eine oder mehrere Abstütznoppen (20) aufweist, welche axial nach außen erstreckend kreisförmig um die Längsachse (L) angeordnet sind und so ausgelegt sind, dass sie sich bei einem Einbau in das aufnehmende Gehäuse (108) anliegend an der inneren Deckelkontur (114) des Gehäuses (108) mit einem in den Innenraum des Gehäuses hineinragenden Kegelstumpf in radialer Richtung (38) nach außen umlegen und an dem Gehäuse (108) axial und radial abstützen.

7. Filterelement nach Anspruch 6, wobei die eine oder mehreren Abstütznoppen (20) so angeordnet sind, dass sie beim Einbau in das Gehäuse (108) mit rippenförmigen Erhebungen (112) in der inneren Deckelkontur (114) des Gehäuses (108) verzahnbar sind.

8. Filterelement nach einem der vorhergehenden Ansprüche 6 - 7, wobei die zweite Endscheibe (18) in radialer Richtung (38) außerhalb der einen oder mehreren Abstütznoppen (20) eine Entlastungsnut (22) aufweist.

9. Filterelement nach einem der vorhergehenden Ansprüche 6 - 8, wobei die zweite Endscheibe (18) in radialer Richtung (38) außerhalb der einen oder mehreren Abstütznoppen (20) und/oder der Entlastungsnut (22) eine Erhebung (24) zur Abstützung der sich in radialer Richtung (38) nach außen umlegenden Abstütznoppen (20) aufweist.

10. Filterelement nach einem der vorhergehenden Ansprüche 6 - 9, wobei die zweite Endscheibe (18) mit dem Stützrohr (14) des Filterelements (10) einstückig ausgeführt ist.

11. Filterelement nach einem der vorhergehenden Ansprüche 6 - 10, wobei die zweite Endscheibe (18) im Bereich zwischen dem Filterkörper (12) und der einen oder mehreren Abstütznoppen (20) eine Verstärkungsplatte (30) oder einen Verstärkungsring (31) aufweist.

12. Filterelement nach einem der vorhergehenden Ansprüche 6 - 11, wobei das Stützrohr (14) an beiden Enden einen ringförmigen Aufsatz (48) mit L-förmigem Querschnitt aufweist, um eine axiale Krafteinleitung in die erste und die zweite Endscheibe (16, 18) räumlich zu verteilen.

13. Filterelement nach einem der vorhergehenden Ansprüche 6 - 12, wobei die zweite Endscheibe (18) aus einem Polyurethanschaum oder einem Elastomer besteht.

14. Filterelement nach einem der vorhergehenden Ansprüche 6 - 13, wobei die erste Endscheibe (16) eine radiale Dichtung (26) gegenüber dem Gehäuse (108) aufweist.

15. Filterelement nach einem der vorhergehenden Ansprüche 6 - 14, wobei der Filterkörper (12) zickzackförmig gefaltet, ringförmig geschlossen ausgeführt ist und aus Papier, aus Papier mit Kunststofffasern verstärkt und/oder aus kunststoffbeschichtetem Papier besteht.

16. Filterelement nach einem der vorhergehenden Ansprüche 6 - 15, wobei die eine oder mehreren Abstütznoppen (20) kreisförmig und voneinander regelmäßig oder unregelmäßig beabstandet angeordnet sind.

17. Filterelement nach einem der vorhergehenden Ansprüche 6 - 16, wobei die eine oder mehreren Abstütznoppen an einer geschlossenen Endscheibe (18) angeordnet sind.

18. Verwendung eines Filterelementes nach einem der Ansprüche 6 - 17 in einem Filtersystem nach einem der Ansprüche 1 - 4.

## Claims

1. Filter system (100) with a filter element (10) disposed in a housing (108), the filter element (10) comprising a filter body (12) in concentric shape with a longitudinal axis (L), a first open or closed end disk (16) disposed on a front side (15) and a second end disk (18) disposed on the opposite front side (17), a support tube (14) disposed concentrically around the longitudinal axis (L) between the first and the second end disk (16, 18), wherein at least one of the end disks (16, 18) features one or more support knobs (20) which are disposed circularly around the longitudinal axis (L) by extending axially outwardly and which during installation into a receiving housing (108), abutting on an inner cover contour (114) of the housing (108), fold down outwardly in radial direction (38) and rest axially and radially against the housing (108), the filter system comprising furthermore
- a housing (108) which is substantially designed concentrically around a longitudinal axis (L),
- a cover (110) closing the housing (108) which is also disposed concentrically around the longitudinal axis (L) and features on its interior side an inner cover contour (114) with a truncated cone protruding into the interior space of the housing to which one or several support knobs (20) of a second end disk (18) of the filter element (10) can be applied and overlapped outwardly in radial direction (28),
- an inlet (102) disposed on the housing (108) and/or on the cover (110) for supplying the medium to be filtered, in particular air,
wherein an outlet (104) for discharging the filtered medium is provided on the housing (108) concentrically to the longitudinal axis (L), wherein a sealing contour (116), which corresponds with the radial sealing (26) of the first end disk (16) of the filter element (10), is provided on the housing (108) in the area of the outlet (104), wherein the filter element (10) is disposed replaceably in the housing (108) of the filter system (100).

2. Filter system (100) according to one of the above claims, wherein in the area of the inlet (102) a cyclone separator (36) is provided and that a dirt outlet (106) is provided on the housing (108) or on the cover (110).

3. Filter system (100) according to one of the above claims, wherein a secondary element (28) is disposed in the interior (50) of the filter element (10) which is in particular connected with the housing (108) and can remain in the housing (108) when changing the filter element (10).

4. Filter system according to one of the above claims, wherein rib-shaped projections are provided in the cover contour (114) which extend in particular radially and are preferably disposed regularly in circular form and can be enclosed in a positive-fit manner by support knobs (20) on the filter element side.

5. Utilization of a filter system (100) according to one of the above claims, as air filter, in particular as air filter of an internal combustion engine.

6. Filter element (10) for being mounted in a filter system according to one of the above claims, comprising a filter body (12) in concentric shape with a longitudinal axis (L), a first open or closed end disk (16) disposed on a front side (15) and a second end disk (18) disposed on the opposite front side (17), a support tube (14) disposed concentrically around the longitudinal axis (L) between the first and the second end disk (16, 18), wherein at least one of the end disks (16, 18) features one or more support knobs (20) which are disposed circularly around the longitudinal axis (L) by extending axially outwardly and designed in such a way that during installation into the receiving housing (108), by abutting on an inner cover contour (114) of the housing (108), they overlap outwardly in radial direction (38) with a truncated cone protruding into the interior space of the housing and rest axially and radially against the housing (108).

7. Filter element according to claim 6, wherein the one or more support knobs (20) are disposed in such a way that they can be interlocked with rib-shaped projections (112) in the inner cover contour (114) of the housing (108) when being installed in the housing (108).

8. Filter element according to one of the above claims 6 - 7, wherein the second end disk (18) features in radial direction (38) outside the one or more support knobs (20) a relief groove (22).

9. Filter element according to one of the above claims 6 - 8, wherein the second end disk (18) features in radial direction (38) outside the one or more support knobs (20) and/or the relief groove (22) a projection (24) for supporting the support knobs (20) overlapping outwardly in radial direction ( 38).

10. Filter element according to one of the above claims 6 - 9, wherein the second end disk (18) is designed as one piece with the support tube (14) of the filter element (10).

11. Filter element according to one of the above claims 6 - 10, wherein the second end disk (18) features a reinforcement plate (30) or a reinforcement ring (31) in the area between the filter body (12) and the one or more support knobs (20).

12. Filter element according to one of the above claims 6 - 11, wherein the support tube (14) features an annular attachment (48) with an L-shaped cross-section at both ends in order to distribute spatially an axial force transmission into the first and the second end disk (16, 18).

13. Filter element according to one of the above claims 6 - 12, wherein the second end disk (18) is made of polyurethane foam or an elastomer.

14. Filter element according to one of the above claims 6 - 13, wherein the first end disk (16) has a radial seal (26) relative to the housing (108).

15. Filter element according to one of the above claims 6 - 14, wherein the filter body (12) is zigzag-folded, has an annularly closed design and is made of paper, of paper reinforced with synthetic fibers and/or of plastic-coated paper.

16. Filter element according to one of the above claims 6 - 15, wherein the one or more support knobs (20) are disposed in a circle and spaced regularly or irregularly from each other.

17. Filter element according to one of the above claims 6 - 16, wherein the one or more support knobs are disposed on a closed end disk (18).

18. Utilization of a filter element according to one of the claims 6 - 17 in a filter system according to one of the claims 1 - 4.

## Revendications

1. Système de filtre (100) avec un élément filtrant (10) disposé dans un boîtier (108), l'élément filtrant (10) comprenant un corps de filtre (12) de forme concentrique avec un axe longitudinal (L), un premier disque d'extrémité (16) ouvert ou fermé placé sur une face frontale (15) et un deuxième disque d'extrémité (18) placé sur la face frontale opposée (17), un tube de soutien (14) placé de manière concentrique autour de l'axe longitudinal (L) entre le premier et le deuxième disques d'extrémité (16, 18), au moins l'un des disques d'extrémité (16, 18) présentant un ou plusieurs picots d'appui (20) qui s'étendent en sens axial vers l'extérieur, sont disposés en forme de cercle autour de l'axe longitudinal (L), et se replient, lors du montage dans un boîtier de réception (108), en sens radial (38) vers l'extérieur en s'appliquant sur un contour intérieur du couvercle (114) du boîtier (108) et s'appuient en sens axial et radial sur le boîtier (108), le système de filtre comprenant également
- un boîtier (108) qui est monté de façon essentiellement concentrique autour d'un axe longitudinal (L),
- un couvercle (110) obturant le boîtier (108), lequel est aussi monté de façon concentrique autour de l'axe longitudinal (L), qui est doté sur sa face intérieure d'un contour intérieur du couvercle (114) avec un tronc de cône pénétrant dans l'intérieur du boîtier et contre lequel peuvent s'appliquer un ou plusieurs picots d'appui (20) d'un deuxième disque d'extrémité (18) de l'élément filtrant (10), ces picots pouvant être repliés en sens radial (38) vers l'extérieur,
- une entrée (102) placée sur le boîtier (108) et/ou sur le couvercle (110) pour faire entrer le milieu à filtrer, notamment l'air,
une sortie (104) destinée à évacuer le milieu filtré étant disposée de façon concentrique par rapport à l'axe longitudinal (L) sur le boîtier (108), un contour d'étanchéité (116) correspondant avec le joint radial (26) du premier disque d'extrémité (16) de l'élément filtrant (10) étant prévu sur le boîtier (108) dans la zone de la sortie (104), l'élément filtrant (10) étant disposé de manière échangeable dans le boîtier (108) du système de filtre (100).

2. Système de filtre (100) selon l'une des revendications précédentes, un séparateur à cyclone (36) étant prévu dans la zone de l'entrée (102) et un orifice d'évacuation des saletés (106) étant prévu sur le boîtier (108) ou sur le couvercle (110).

3. Système de filtre (100) selon l'une des revendications précédentes, un élément secondaire (28) étant disposé à l'intérieur (50) de l'élément filtrant (10), cet élément étant relié notamment au boîtier (108) et pouvant rester dans le boîtier (108) en cas d'échange de l'élément filtrant (10).

4. Système de filtre selon l'une des revendications précédentes, des éminences en forme de nervures étant prévues dans le contour de couvercle (114), ces éminences évoluant en particulier en sens radial, étant disposées de préférence de façon régulière en forme de cercle et pouvant être entourées, par crabotage, de picots d'appui (20) placés du côté de l'élément filtrant.

5. Utilisation d'un système de filtre (100) selon l'une des revendications précédentes, en tant que filtre à air, en particulier en tant que filtre à air d'un moteur à combustion interne.

6. Elément filtrant (10) destiné à être monté dans un système de filtre selon l'une des revendications précédentes, comprenant un corps de filtre (12) de forme concentrique avec un axe longitudinal (L), un premier disque d'extrémité (16) ouvert ou fermé placé sur une face frontale (15) et un deuxième disque d'extrémité (18) placé sur la face frontale opposée (17), un tube de soutien (14) placé de manière concentrique autour de l'axe longitudinal (L) entre le premier et le deuxième disques d'extrémité (16, 18), au moins l'un des disques d'extrémité (16, 18) présentant un ou plusieurs picots d'appui (20) qui s'étendent en sens axial vers l'extérieur, sont disposés en forme de cercle autour de l'axe longitudinal (L) et sont conçus de telle manière qu'ils se replient en sens radial vers l'extérieur, lors du montage dans le boîtier de réception (108), en s'appliquant sur le contour intérieur du couvercle (114) du boîtier (108), avec un tronc de cône pénétrant dans l'intérieur du boîtier, et s'appuient en sens axial et radial sur le boîtier (108).

7. Système de filtre selon la revendication 6, l'un ou les multiples plusieurs picots d'appui (20) étant disposés de telle manière que, lors du montage dans le boîtier (108), ils puissent s'engrener avec des éminences (112) en forme de nervures dans le contour intérieur de couvercle (114) du boîtier (108).

8. Système de filtre selon l'une des revendications 6 à 7 précédentes, le deuxième disque d'extrémité (18) présentant en sens radial (38) une rainure de décharge (22), en dehors de l'un ou des multiples picots d'appui (20).

9. Système de filtre selon l'une des revendications 6 à 8 précédentes, le deuxième disque d'extrémité (18) présentant une éminence (24) en sens radial (38) en dehors de l'un ou des multiples picots d'appui (20) et/ou de la rainure de décharge (22), cette éminence servant d'appui aux picots d'appui (20) qui se replient en sens radial (38) vers l'extérieur.

10. Système de filtre selon l'une des revendications 6 à 9 précédentes, le deuxième disque d'extrémité (18) étant réalisé en un bloc avec le tube de soutien (14) de l'élément filtrant (10).

11. Système de filtre selon l'une des revendications 6 à 10 précédentes, le deuxième disque d'extrémité (18) étant pourvu, dans la zone située entre le corps de filtre (12) et de l'un ou des multiples picots d'appui (20), d'une plaque de renfort (30) ou d'une bague de renfort (31).

12. Système de filtre selon l'une des revendications 6 à 11 précédentes, le tube de soutien (14) présentant à ses deux extrémités un chapeau (48) annulaire avec une section en forme de L qui permet de répartir dans l'espace une force axiale introduite dans le premier et le deuxième disques d'extrémité (16, 18).

13. Système de filtre selon l'une des revendications 6 à 12 précédentes, le deuxième disque d'extrémité (18) étant réalisé en mousse polyuréthane ou en élastomère.

14. Système de filtre selon l'une des revendications 6 à 13 précédentes, le premier disque d'extrémité (16) présentant un joint radial (26) par rapport au boîtier (108).

15. Système de filtre selon l'une des revendications 6 à 14 précédentes, le corps de filtre (12) étant plié en accordéon, exécuté en forme d'anneau fermé, et composé de papier, de papier renforcé de fibres synthétiques et/ou de papier revêtu de matière synthétique.

16. Système de filtre selon l'une des revendications 6 à 15 précédentes, l'un ou les multiples picots d'appui (20) étant disposés en forme de cercle et espacés de manière régulière ou irrégulière les uns des autres.

17. Système de filtre selon l'une des revendications 6 à 16 précédentes, l'un ou les multiples picots d'appui étant disposés sur un disque d'extrémité (18) fermé.

18. Utilisation d'un système de filtre selon l'une des revendications 6 à 17 dans un système de filtre selon l'une des revendications 1 à 4.
